(19) Europäisches Patentamt
European Patent Office
Office européen des brevets

(11) **EP 1 843 055 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(51) Int Cl.:
*F16C 19/52* *(2006.01)* *G01L 5/00* *(2006.01)*
*F16C 33/58* *(2006.01)*

(21) Anmeldenummer: **07006804.4**

(22) Anmeldetag: **31.03.2007**

(54) **Wälzlager mit Sensor**

Roller bearing with sensor

Palier de roulement doté d'un capteur

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **07.04.2006 DE 102006016476**

(43) Veröffentlichungstag der Anmeldung:
**10.10.2007 Patentblatt 2007/41**

(73) Patentinhaber: **Schaeffler Technologies AG & Co. KG**
**91074 Herzogenaurach (DE)**

(72) Erfinder:
• **Heim, Jens**
**97493 Bergrheinfeld (DE)**
• **Werb, Roland**
**97519 Riedbach (DE)**
• **Mock, Christian**
**97421 Schweinfurt (DE)**
• **Niebling, Peter**
**97688 Bad Kissingen (DE)**

(56) Entgegenhaltungen:
EP-A1- 0 018 936     DE-A1- 10 136 438
JP-A- 6 341 430      US-A- 5 952 587

## Beschreibung

## Gebiet der Erfindung

Die vorliegende Erfindung bezieht sich auf ein Wälzlager mit einem Sensor. Die Erfindung wird unter Bezugnahme auf ein Wälzlager in einem Kraftfahrzeug beschrieben, es wird jedoch darauf hingewiesen, dass die Erfindung auch bei anderen Vorrichtungen, in denen Wälzlager eingesetzt werden, anwendbar ist.

Um die Sicherheit und den Fahrkomfort moderner Fahrzeuge weiter zu verbessern, benötigen die elektronischen Regelsysteme für den Fahrbetrieb im Fahrzeug zunehmend mehr Information über die aktuelle Fahrsituation. Zusätzlich zu den aktuellen Daten des Motors, des Getriebes und der Drehzahl der einzelnen Räder sollen auch die aktuellen Kräfte und Kraftrichtungen wie Radaufstandskräfte, die auf die einzelnen Reifen wirken, zur Regelung des Fahrbetriebs mit herangezogen werden. Um diese Kräfte zu erfassen sind aus dem Stand der Technik verschiedene Lösungsversuche bekannt. So ist es bekannt, bei einer Radlagereinheit an verschiedenen Stellen an dem jeweils stehenden Lagerring Sensoren anzuordnen. Aus den gemessenen Kräften an dem stehenden Ring des Radlagers können bei einer Geradeausfahrt oder bei einer Kurvenfahrt die Kräfte, die am Reifen wirken, bestimmt werden.

Aus der DE 101 05 298 C1 ist eine Radlagereinheit zum Messen der Kontaktkräfte zwischen Reifen und Straße bekannt. Bei der dort beschriebenen Vorrichtung sind Sensoren am stehenden Lagerring oder dessen Gehäuse vorgesehen.

Die aus dem Stand der Technik bekannten Sensoren wie beispielsweise Dehnmessstreifen (DMS) geben bei der Messung der Kräfte ein periodisches Signal aus. Dieses Signal setzt sich zusammen aus einem periodischen Signal, welches punktsymmetrisch ist und einem Gleichanteil, der von der Belastung des Lagers abhängig ist. Der periodische Signalanteil entsteht durch die Relativbewegung der Wälzkörper gegenüber dem Sensorstreifen, d. h. die Periode hängt damit von der Wälzkörperumlauffrequenz und der Anzahl der Wälzkörper ab. Damit wird im Stand der Technik ein in Abhängigkeit von der Wälzkörperumlauffrequenz periodisches Signal gemessen. So treten beispielsweise bei einem Wälzlager mit zwölf Wälzkörpern pro Umlauf der Wälzkörper zwölf Perioden auf.

Messtechnisch interessant ist der Gleichanteil aus dem die jeweils wirkenden Kräfte ermittelt werden. Im Stand der Technik werden gleitende Mittelwertfilter mit der Fensterbreite einer Signalperiode verwendet. Auch ist es bekannt, das Signal über die Signalperiode zu integrieren, um den Gleichanteil von dem periodischen Signal zu trennen.

Bei dieser Methode tritt jedoch das Problem auf, dass zwischen dem Auftreten eines Kraft- oder Momentenereignisses bis zur Ausgabe des dadurch entstandenen Gleichanteils der gemessenen Dehnung ein Zeitversatz auftritt, der proportional zur Dauer einer Signalperiode ist. Daneben ist es nicht möglich, bei einem stehendem Lager ohne Kenntnis der Wälzkörperposition von den gemessenen Dehnungen auf die wirkenden Kräfte und Momente zu schließen, da, wie erwähnt, das von dem DMS-Streifen ausgegebene Signal auch von der Lage der Wälzkörper gegenüber dem DMS-Streifen abhängt.

Aus der japansichen Patentanmeldung JP 06341430 ist ein Wälzlager mit einem Innering, Wälzkörpern und einem Außenring bekannt, welches am Außenring einen Sensorstreifen mit einer effektiven Länge aufweist, die einem Wälzkörperabstand entspricht.

Der vorliegenden Erfindung liegt daher die Aufgabe zugrunde, ein Kraft und Momente messendes Wälzlager zur Verfügung zu stellen, welches sowohl im Stillstand als auch in allen Drehzahlbereichen, in denen das Lager betrieben werden kann, eine drehzahlunabhängige und qualitativ gleich bleibende Signalerfassung bzw. Auswertung und Ausgabe ermöglicht. Daneben soll das Auswerteverfahren vereinfacht werden und insbesondere auf die Verwendung zusätzlicher Filter wie ein gleitender Mittelwertfilter und dergleichen verzichtet werden. Weiterhin soll die Signalerfassung vereinfacht werden.

Dies wird erfindungsgemäß durch ein Wälzlager nach Anspruch 1 oder 9 erreicht. Vorteilhafte Ausführungsformen und Weiterbildungen sind Gegenstand der Unteransprüche.

Das erfindungsgemäße Wälzlager weist einen Außenring und einen Innenring auf und eine Vielzahl von zwischen dem Außenring und dem Innenring angeordneten Wälzkörpern. Dabei weist das Wälzlager wenigstens einen Sensorstreifen auf, der an einer Umfangsfläche wenigstens eines Lagerrings angeordnet ist. Erfindungsgemäß weist der Sensorstreifen eine vorgegebene aktive Länge auf und diese aktive Länge ist unter Berücksichtigung des Abstandes zweier benachbarter Wälzkörper festgelegt. Dazu ist der Sensorstreifen an der Umfangsfläche angeordnet.

Der Abstand zweier benachbarter Wälzkörper kann einerseits direkt der geometrische Abstand der Mittelpunkte dieser beiden Wälzkörper sein. Daneben ist es auch möglich den Abstand über den Winkel, den die jeweiligen Mittelpunkte der beiden Wälzkörper bezüglich des Lagermittelpunkts miteinander einschließen, zu bestimmen.

Unter der aktiven Länge des Sensorstreifens wird diejenige Länge verstanden, über die hinweg die auf den Sensorstreifen übertragenen Kräfte ermittelt werden. Insbesondere handelt es sich dabei um die Messgitterlänge eines DMS bzw. den Bereich der Dehnungsübertragung auf dem DMS.

Bevorzugt handelt es sich bei der Umfangsfläche um eine den Wälzkörpern abgewandte Umfangsfläche.

Unter der den Wälzkörpern abgewandten Umfangsfläche, wird diejenige Umfangsfläche eines Innen- oder Außenrings verstanden, die nicht mit den Wälzkörpern in Kontakt steht. Im Falle des Außenrings handelt es sich insbesondere um den Außenumfang desselben und im Falle des Innenrings um dessen Innenumfang.

Durch die Berücksichtigung des Abstandes zweier benachbarter Wälzkörper bei der Festlegung der aktiven Länge des Sensormessstreifens, können diejenigen Messeffekte, welche durch das Vorbeiführen der Wälzkörper an dem Messstreifen entstehen, unterdrückt werden und damit bereits das gemessene Signal von dem oben beschriebenen periodischen Anteil befreit werden.

Erfindungsgemäß ist die aktive Länge ein ganzzahliges Vielfaches des auf die abgewandte Umfangsfläche projizierten Abstandes der benachbarten Wälzkörper. Es wird durch diese spezielle geometrische Form eine Mittelung des gemessenen Signals erreicht. Insbesondere wird kein periodisches Signal ausgegeben, da das von dem Sensorstreifen ausgegebene Signal unabhängig von der genauen Position der Wälzkörper bezüglich des Sensorstreifens ist. Damit wird durch diese Ausführungsform die gleitende Mittelwertbildung aus dem Stand der Technik im Zeitbereich des Sensorstreifen-Signals durch eine geometrische Mittelung durch die gezielte Formgebung des Sensorstreifens ersetzt. Diese geometrische Mittelung erzeugt keinen Zeitversatz.

Genauer entspricht bei Verwendung eines DMS als Sensorstreifen sowohl die Messgitterlänge des DMS als auch der Bereich der Dehnungsübertragung auf den DMS dem auf die abgewandte Umfangsfläche projizierten Wälzkörperabstand oder einem ganzzahligen Vielfachen davon.

Falls beispielsweise der Sensorstreifen auf dem Außenring angeordnet ist, wäre insoweit die Mantelfläche dieses Außenrings für die Bestimmung der Messgitterlänge und der Dehnungsübertragung des DMS entscheidend.

Erfindungsgemäß ist die aktive Länge geringfügig geringer oder höher als der auf die abgewandte Umfangsfläche projizierte Abstand. Daher wird neben dem Gleichanteil auch ein geringfügiger periodischer Anteil ausgegebenen werden, der gleichzeitig als Maß für die Umlauffrequenz der Wälzkörper verwendet werden könnte. Entscheidend ist jedoch auch, dass sich, wie oben gesagt, die aktive Länge des Sensorstreifens an dem Wälzkörperabstand orientiert.

Unter dem projizierten Abstand wird eine Projektion ausgehend vom Mittelpunkt des Wälzlagers verstanden. Je nach der Formgebung der entsprechenden Umfangsfläche kann es sich bei der projizierten Fläche um eine ebene oder gekrümmte Fläche handeln.

Vorzugsweise ist die aktive Länge der auf die abgewandte Umfangsfläche projizierte Abstand zweier benachbarter Wälzkörper. Dies stellt den Spezial-fall dar, dass es sich bei dem ganzzahligen Vielfachen um das genau Einfache des projizierten Abstandes der benachbarten Wälzkörper handelt. Erfindungsgemäß ist vorgesehen den Sensorstreifen auf einem ruhenden Lagerring anzuordnen. Einerseits werden die gemessenen Signale einfacher übertragen und andererseits muss bei der Auswertung der Kräfte nicht die jeweilige Drehposition eines drehenden Rings berücksichtigt werden.

Bei einer weiteren bevorzugten Ausführungsform ist der Sensorstreifen auf dem Außenring des Lagers angeordnet. Dies bedeutet, dass, wie oben erwähnt, die Messgitterlänge des Sensorstreifens in diesem Fall dem auf die Mantelfläche des Außenrings projizierten Wälzkörperabstand oder einem ganzzahligen Vielfachen davon entspricht.

Bei einer weiteren bevorzugten Ausführungsform ist eine Vielzahl von Sensorstreifen vorgesehen. Diese Sensorstreifen sind an dem jeweils ruhenden Lagerring an festen vorbestimmten Positionen angeordnet. Diese Positionen sind im Hinblick auf die zu messenden Kräfte ausgewählt, beispielsweise im Hinblick auf zu messende Gewichtskräfte, zu messende Bremskräfte oder auch zu bestimmende Reibbeiwerte.

Vorzugsweise handelt es sich bei den Sensorstreifen um einen DMS-Streifen. Mit diesen Dehnungsmessstreifen oder Dünnschicht-Dehnungsmessstreifen können die Reaktionskräfte (die Spannungsveränderung) an dem jeweils feststehenden Lagerring des Radlagers ermittelt werden. Bei einer Fahrt ohne Bremsen können aus diesen Belastungen direkt die Radaufstandskräfte ermittelt werden. In einer bevorzugten Ausführungsform können auch Halbleiter-DMS verwendet werden. Diese bieten den Vorteil geringer Abmessungen.

Anstelle eines Dehnmessstreifens wäre es auch möglich, neuerdings bekannt gewordene PZT (Blei-Zirkonat-Titanat) Fasern einzusetzen. Derartige Sensoren basieren auf dem piezoelektrischen Effekt. Die Fasern können dabei beispielsweise mit Epoxidharz vergossen werden.

Die vorliegende Erfindung ist weiterhin auf ein Fahrzeug und insbesondere auf ein Kraftfahrzeug mit einem Wälzlager der oben beschriebenen Art gerichtet.

Weitere Vorteile und Ausführungsformen ergeben sich aus den beigefügten Zeichnungen.

Darin zeigen:

Fig. 1    eine Darstellung zur Geometrie eines Sensorstreifens in einer ersten Ausführungsform;

Fig. 2    eine Darstellung zur Geometrie eines Sensorstreifens in einer zweiten Ausführungsform;

Fig. 3    eine Darstellung zur Geometrie eines Sensorstreifens in einer dritten Ausführungsform;

Fig. 4    eine Darstellung eines mit einem erfindungsgemäßen DMS aufgenommenen Signals;

Fig. 5    eine Signalverarbeitung nach dem Stand der Technik; und

Fig. 6     eine Darstellung des zeitlichen Verzuges im Vergleich.

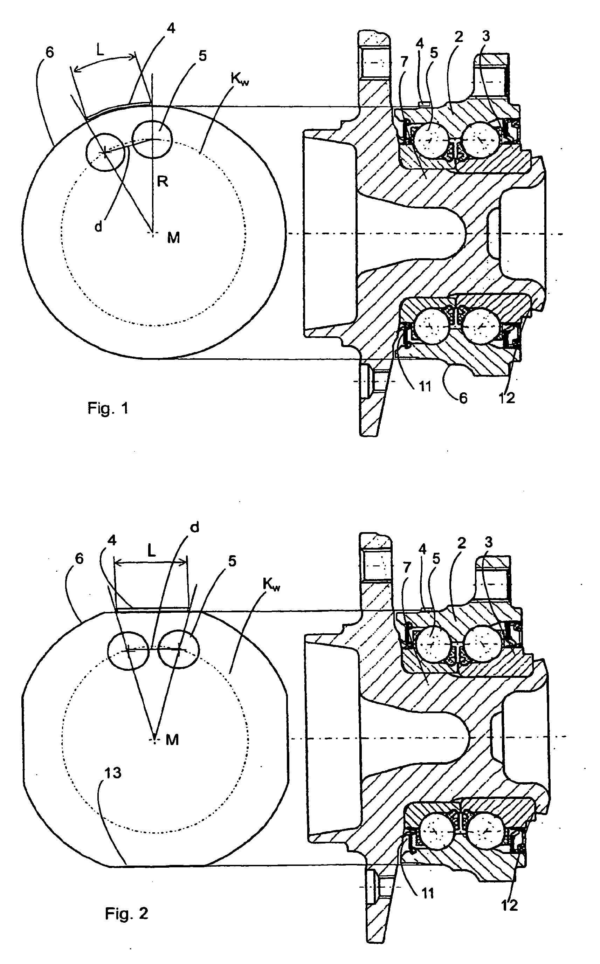

Fig. 1 zeigt eine Seitenansicht eines Wälzlagers sowie eine schematische Draufsicht zur Veranschaulichung der Länge des Sensorstreifens in Abhängigkeit von dem Wälzkörper-Abstand.

Dabei bezieht sich das Bezugszeichen 2 auf einen Außenring des Lagers und das Bezugszeichen 3 auf einen Innenring bzw. auf eine Innenringhälfte. Zwischen dem Außenring und dem Innenring ist eine Vielzahl von Wälzkörpem 5 in zwei Reihen angeordnet.

Das Bezugszeichen 7 bezieht sich auf den sich drehenden Radflansch. An dem Außenumfang des Außenrings 2 ist bei der in Fig. 1 gezeigten Ausführungsform ein Sensorstreifen 4 vorgesehen, der sich in der Umfangsrichtung des Außenrings 2 und damit in einer Ebene senkrecht zur Figurenebene erstreckt. Das Bezugszeichen 11 kennzeichnet ein Abdichtelement und das Bezugszeichen 12 einen Vorsprung des Radflansches 7 zur axialen Fixierung der Innenringhälften 3.

Wie sich aus dem linken schematischen Teilbild von Fig. 1 ergibt, ist der Außenumfang des Außenrings 2 bei dieser Ausführungsform kreisförmig ausgebildet. Dabei bezieht sich das Bezugszeichen Kw auf die Kreislinie der Wälzkörper 5, d. h. diejenige Kreislinie, auf der die Mittelpunkte bzw. die Drehachsen der Wälzkörper 5 angeordnet sind. Das Bezugszeichen L kennzeichnet die aktive Länge des Sensorstreifens 4.

Die Messgitterlänge des Dehnmessstreifen entspricht dem auf die Mantelfläche des Außenrings ausgehend vom Mittelpunkt M projizierten Wälzkörperabstand d oder einem ganzzahligen Vielfachen davon.

Bei der in Fig. 1 gezeigten Ausführungsform könnte die aktive Länge L des Messstreifens auch ausgedrückt werden durch den Zusammenhang

$$L = 2\pi R/n \, ,$$

wobei R der Radius der Umfangsfläche des Außenrings und n die Anzahl der Wälzkörper 5 in einer Reihe ist. Damit hängt die aktive Länge hier von dem Außendurchmesser des Außenrings 2 ab.

Fig. 2 zeigt eine Ausführungsform des erfindungsgemäßen Wälzlagers. Der wesentliche Unterschied liegt hier in der Ausgestaltung des Außenumfangs des Außenrings 2. Dieser weist bei der in Fig. 2 gezeigten Ausführungsform abgeflachte Bereiche 13 auf, auf denen Sensorstreifen angeordnet sind. Auch bei dieser Ausführungsform könnte die Länge des hier gerade verlaufenden Sensorstreifens beispielsweise aus geometrischen Überlegungen unter zu HIlfenahme der Strahlensätze ermittelt werden.

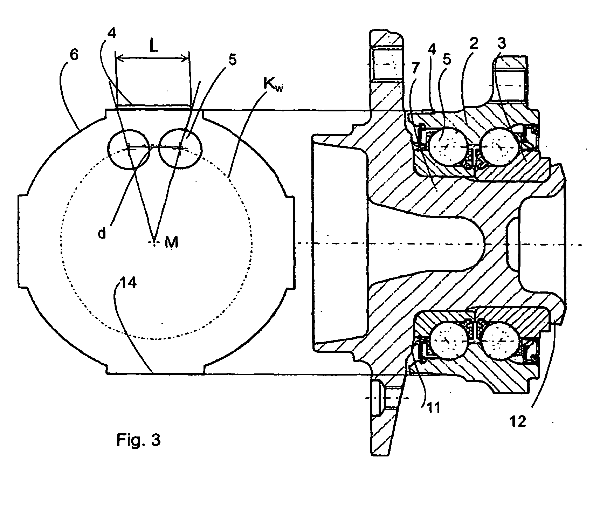

Fig. 3 zeigt eine weitere Ausführungsform des erfindungsgemäßen Wälzlagers. Hier ist der Sensorstreifen an einer gegenüber der Krefsform des Au-βenrings erhabenen Abflachung 14 angeordnet. Auch in diesem Fall verläuft der DMS im Wesentlichen geradlinig und seine Länge kann sich ebenfalls aus geometrischen Überlegungen unter zu Hilfenahme der Strahlensätze ergeben.

Zusätzlich zu den in den Figuren 2 und 3 gezeigten Ausführungsformen kann jedoch die abgeflachte Oberlläche, auf dem der Dehnmessstreifen 4 angeordnet ist, auch andere Formen annehmen, entscheidend ist jedoch in jedem Fall, dass die Länge dieses Dehnmessstreifens an die oben erwähnte Projektion oder an ein Vielfaches davon angepasst ist.

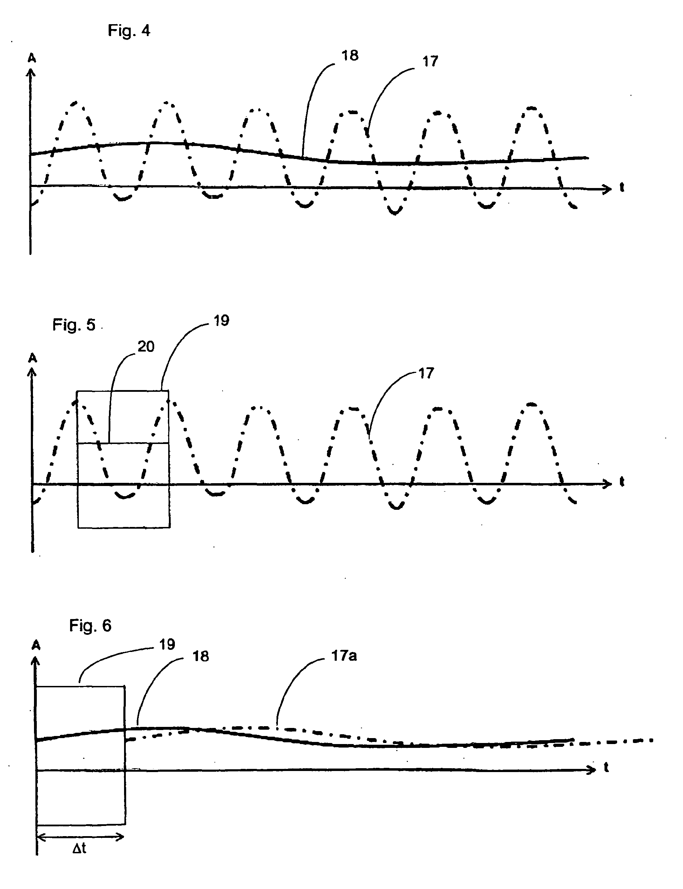

Fig. 4 zeigt einen Vergleich der Sensorssignale. Dabei bezieht sich das Bezugszeichen 17 auf ein mit einem Dehnmessstreifen nach dem Stand der Technik aufgenommenes Signal. Hier weist das Signal die oben erwähnten periodischen Schwankungen auf, die durch die Vorbeibewegung des Wälzkörpers an dem Dehnmessstreifen entstehen. Das Bezugszeichen 18 bezieht sich auf ein Signal mit einem erfindungsgemäßen Dehnmessstreifen, welches von dem periodischen Anteil des Signals 17 bereinigt ist. Im Fall des Signals 17 muss zur Ermittelung des messtechnisch relevanten Gleichanteils dieses Signal über wenigstens eine Signalperiode integriert werden. In den Figuren 4 - 6 ist die Amplitude A gegenüber der Zeit t aufgetragen.

Fig. 5 zeigt eine derartige Integration. Genauer gesagt ist in Fig. 5 ein Zeitfenster 19 gezeigt, weiches die mindestens nötige Fensterbreite für die gleitende Mittelwertbildung anzeigt. Die Integration über dieses Fenster ergibt den messtechnisch relevanten Wert des Gleichanteils.

Fig. 6 zeigt eine Veranschaulichung des Zeitverzugs At durch die gleitende Mittelwertbildung. Hier bezieht sich das Bezugszeichen 19 wiederum auf das Zeitfenster, welches nötig ist, um eine Mittelwertbildung durchzuführen. Bei zeitlicher Betrachtung ergibt sich, dass das Signal 17a, das mit einem Dehnmessstreifen nach dem Stand der Technik und gleitender Mittelwertbildung aufgenommen wurde, um die zeitliche Differenz $\Delta t$ verspätet ist, d. h. gegenüber dem entsprechenden Signal, welches mit dem erfindungsgemä-βen Dehnmessstreifen aufgenommen wurde, versetzt ist. Damit kann durch den erfindungsgemäßen Sensorstreifen der zeitliche Verzug entfallen.

**Bezugzeichenliste**

| | |
|---|---|
| 1 | Wälzlager |
| 2 | Außenring |
| 3 | Innenring bzw. Innenringhälfte |
| 4 | Sensorstreifen |
| 5 | Wälzkörper |
| 6 | Umfangsfläche des Außenrings 2 |
| 7 | sich drehender Radflansch |
| 11 | Abdichtelement |

| 12 | Vorsprung des Radflansches 7 |
| 13 | abgeflachte Bereiche |
| 14 | erhabene Abflachung |
| 17 | Signal mit Sensorstreifen nach Stand der Technik |
| 17a | zeitversetztes Signal |
| 18 | Signal mit erfindungsgemäßen Sensorstreifen |
| 19 | Zeitfenster |
| d | Wälzkörperabstand |
| L | aktive Länge des Sensorstreifens |
| M | Mittelpunkt |
| n | Anzahl der Wälzkörper |
| R | Radius |
| Kw | Kreislinie der Wälzkörper |
| Δt | Zeitverzug |
| A | Amplitude |
| t | Zeit |

**Patentansprüche**

1. Wälzlager mit einem Außenring (2), einem Innenring (3) und einer Vielzahl von zwischen dem Außenring (2) und dem Innenring (3) angeordneten Wälzkörpern (5), wobei das Wälzlager (1) wenigstens einen Sensorstreifen (4) aufweist, wobei der Sensorstreifen (4)

   - eine vorgegebene aktive Länge (L) aufweist, und
   - diese aktive Länge (L) unter Berücksichtigung des Abstandes (d) zweier benachbarter Wälzkörper (5) festgelegt ist,

   **dadurch gekennzeichnet, dass**
   der Sensorstreifen (4) in einem abgeflachten Bereich der Umfangsfläche (6) eines der beiden Lagerringe (2,3) angeordnet ist.

2. Wälzlager nach Anspruch 1, wobei die Umfangsfläche (6) eine von den Wälzkörpern (5) abgewandte Umfangsfläche (6) ist.

3. Wälzlager nach Anspruch 2, wobei die aktive Länge ein ganzzahliges Vielfaches des auf die abgewandte Umfangsfläche (6) projiziertem Abstandes (d) der benachbarten Wälzkörper ist (5).

4. Wälzlager nach wenigstens einem der Ansprüche 2 oder 3, wobei die aktive Länge der auf die abgewandte Umfangsfläche (6) projizierte Abstand (d) zweier benachbarter Wälzkörper (5) ist.

5. Wälzlager nach wenigstens einem der Ansprüche 1 bis 4, wobei der Sensorstreifen (4) auf dem Außenring (2) des Lagers angeordnet ist.

6. Wälzlager nach wenigstens einem der Ansprüche 1 bis 5, wobei eine Vielzahl von Sensorstreifen (4) vorgesehen ist.

7. Wälzlager nach wenigstens einem der Ansprüche 1 bis 6, wobei der Sensorstreifen (4) ein DMS-Streifen (4) oder ein Sensor auf Basis eines piezoelektrischen Effekts, insbesondere eine PZT (Blei-Zirkonat-Titanat) Faser, ist.

8. Fahrzeug, insbesondere Kraftfahrzeug, mit wenigstens einem Wälzlager (1) nach einem der Ansprüche 1 bis 7.

9. Wälzlager mit einem Außenring (2), einem Innenring (3) und einer Vielzahl von zwischen den Lagerringen (2,3) angeordneten Wälzkörpern (5), wobei das Wälzlager (1) wenigstens einen Sensorstreifen (4) aufweist, wobei der Sensorstreifen (4)

   - an einer Umfangsfläche (6) des Außenringes (2) oder des Innenringes (3) angeordnet ist und der jeweilige Lagerring (2,3) ein ruhender Lagerring (2,3) ist,
   - eine vorgegebene aktive Länge (L) aufweist, und
   - diese aktive Länge (L) unter Berücksichtigung des Abstandes (d) zweier benachbarter Wälzkörper (5) festgelegt ist,

   **dadurch gekennzeichnet, dass**
   die aktive Länge (L) des Sensorstreifens (4) geringfügig so vom projizierten Abstand zweier benachbarter Wälzkörper (5) oder einem Vielfachen dieses Abstandes abweicht, dass der Sensorstreifen (4) zur Ausgabe eines Signals mit einem Gleichanteil und einem periodischen Anteil vorgesehen ist, wobei der projizierte Abstand eine Projektion des Abstandes (d) der beiden benachbarten Wälzkörper (5) ausgehend vom Mittelpunkt des Wälzlagers auf die Umfangsfläche (6) ist.

10. Wälzlager nach Anspruch 9, wobei die Umfangsfläche (6) eine von den Wälzkörpern abgewandte Umfangsfläche (6) ist.

11. Wälzlager nach Anspruch 9 oder 10, wobei der Sensorstreifen (4) auf dem Außenring (2) des Lagers angeordnet ist.

12. Wälzlager nach wenigstens einem der Ansprüche 9 bis 11, wobei eine Vielzahl von Sensorstreifen (4) vorgesehen ist.

13. Wälzlager nach wenigstens einem der Ansprüche 9 bis 12, wobei der Sensorstreifen (4) ein DMS-Streifen (4) oder ein Sensor auf Basis eines piezoelektrischen Effekts, insbesondere eine PZT (Blei-Zirkonat-Titanat) Faser, ist.

**14.** Fahrzeug, insbesondere Kraftfahrzeug, mit wenigstens einem Wälzlager (1) nach einem der Ansprüche 9 bis 13.

## Claims

**1.** Roller bearing with an outer ring (2), an inner ring (3) and a plurality of rolling bodies (5) arranged between the outer ring (2) and the inner ring (3), wherein the roller bearing (1) has at least one sensor strip (4), wherein the sensor strip (4)

- has a defined active length (L), and
- this active length (L) is specified taking into account the distance (d) between two adjacent rolling bodies (5),

**characterized in that**
the sensor strip (4) is arranged in a flattened region of the circumferential surface (6) of one of the two bearing rings (2, 3).

**2.** Roller bearing according to Claim 1, wherein the circumferential surface (6) is a circumferential surface (6) which faces away from the rolling bodies (5).

**3.** Roller bearing according to Claim 2, wherein the active length is an integer plural of the distance (d) between the adjacent rolling bodies (5) projected onto the circumferential surface (6) which faces away.

**4.** Roller bearing according to at least one of Claims 2 or 3, wherein the active length is the distance (d) between two adjacent rolling bodies (5) projected onto the circumferential surface (6) which faces away.

**5.** Roller bearing according to at least one of Claims 1 to 4, wherein the sensor strip (4) is arranged on the outer ring (2) of the bearing.

**6.** Roller bearing according to at least one of Claims 1 to 5, wherein a plurality of sensor strips (4) is provided.

**7.** Roller bearing according to at least one of Claims 1 to 6, wherein the sensor strip (4) is a strain gauge (4) or a sensor based on a piezoelectric effect, in particular a PZT (lead-zirconatetitanate) fibre.

**8.** Vehicle, in particular motor vehicle, with at least one roller bearing (1) according to one of Claims 1 to 7.

**9.** Roller bearing with an outer ring (2), an inner ring (3) and a plurality of rolling bodies (5) arranged between the bearing rings (2, 3), wherein the roller bearing (1) has at least one sensor strip (4), wherein the sensor strip (4)

- is arranged on a circumferential surface (6) of the outer ring (2) or the inner ring (3) and the respective bearing ring (2, 3) is an idle bearing ring (2, 3),
- has a defined active length (L), and
- this active length (L) is specified taking into account the distance (d) between two adjacent rolling bodies (5),

**characterized in that**
the active length (L) of the sensor strip (4) deviates slightly from the projected distance between two adjacent rolling bodies (5) or a multiple of this distance such that the sensor strip (4) is provided for the output of a signal with a constant component and a periodic component, wherein the projected distance is a projection of the distance (d) between the two adjacent rolling bodies (5) from the centre point of the roller bearing onto the circumferential surface (6).

**10.** Roller bearing according to Claim 9, wherein the circumferential surface (6) is a circumferential surface (6) which faces away from the rolling bodies.

**11.** Roller bearing according to Claim 9 or 10, wherein the sensor strip (4) is arranged on the outer ring (2) of the bearing.

**12.** Roller bearing according to at least one of Claims 9 to 11, wherein a plurality of sensor strips (4) is provided.

**13.** Roller bearing according to at least one of Claims 9 to 12, wherein the sensor strip (4) is a strain gauge (4) or a sensor based on a piezoelectric effect, in particular a PZT (lead-zirconatetitanate) fibre.

**14.** Vehicle, in particular motor vehicle, with at least one roller bearing (1) according to one of Claims 9 to 13.

## Revendications

**1.** Palier de roulement doté d'une bague extérieure (2), d'une bague intérieure (3) et d'une pluralité de corps de rouleau (5) disposés entre la bague extérieure (2) et la bague intérieure (3), le palier de roulement (1) comportant au moins une bande de détection (4), la bande de détection (4) :

- présentant une longueur active (L) prédéfinie ; et
- cette longueur active (L) étant déterminée en tenant compte de l'écartement (d) entre deux corps de rouleau (5) connexes ;

**caractérisé en ce que** :

> la bande de détection (4) est disposée dans une région aplanie de la surface périphérique (6) d'une des deux bagues de palier de roulement (2,3).

2. Palier de roulement selon la revendication 1, la surface périphérique (6) étant une surface périphérique (6) opposée des corps de rouleau (5).

3. Palier de roulement selon la revendication 2, la longueur active étant un multiple entier de l'écartement (d) projeté sur la surface périphérique (6) opposée des corps de rouleau (5) connexes.

4. Palier de roulement selon au moins l'une quelconque des revendications 2 ou 3, la longueur active étant l'écartement (d) projeté sur la surface périphérique (6) opposée de deux corps de rouleau (5) connexes.

5. Palier de roulement selon au moins l'une quelconque des revendications 1 à 4, la bande de détection (4) étant disposée sur une bague extérieure (2) du palier de roulement.

6. Palier de roulement selon au moins l'une quelconque des revendications 1 à 5, une pluralité de bandes de détection (4) étant prévue.

7. Palier de roulement selon au moins l'une quelconque des revendications 1 à 6, la bande de détection (4) étant une bande DMS (4) ou un capteur basé sur un effet piézoélectrique, notamment une fibre PZT (titanate-zirconate de plomb).

8. Véhicule, notamment véhicule automobile, équipé d'au moins un palier de roulement (1) selon l'une quelconque des revendications 1 à 7.

9. Palier de roulement doté d'une bague extérieure (2), d'une bague intérieure (3) et d'une pluralité de corps de rouleau (5) disposés entre les bagues de palier (2, 3), le palier de roulement (1) comportant au moins une bande de détection (4), la bande de détection (4) :

> - étant disposée au niveau d'une surface périphérique (6) de la bague extérieure (2) ou de la bague intérieure (3) et la bague de palier (2,3) respective étant une bague de palier (2,3) dormante ;
> - présentant une longueur active (L) prédéfinie ; et
> - cette longueur active (L) étant déterminée en tenant compte de l'écartement (d) entre deux corps de rouleau (5) connexes ;

**caractérisé en ce que** :

> la longueur active (L) de la bande de détection (4) s'écarte légèrement de l'écartement projeté de deux corps de rouleau (5) connexes ou d'un multiple de cet écartement de telle sorte que la bande de détection (4) est prévue pour émettre un signal avec une partie fixe et une partie périodique, l'écartement projeté étant une projection de l'écartement (d) des deux corps de rouleau (5) connexes à partir du point médian du palier de roulement sur la surface périphérique (6).

10. Palier de roulement selon la revendication 9, la surface périphérique (6) étant une surface périphérique (6) opposée des corps de rouleau.

11. Palier de roulement selon la revendication 9 ou 10, la bande de détection (4) étant disposée sur la bague extérieure (2) du palier de roulement.

12. Palier de roulement selon au moins l'une quelconque des revendications 9 à 11, une pluralité de bandes de détection (4) étant prévue.

13. Palier de roulement selon au moins l'une quelconque des revendications 9 à 12, la bande de détection (4) étant une bande DMS (4) ou un capteur basé sur un effet piézoélectrique, notamment une fibre PZT (titanate-zirconate de plomb).

14. Véhicule, notamment véhicule automobile, équipé d'au moins un palier de roulement (1) selon l'une quelconque des revendications 9 à 13.

Fig. 1

Fig. 2

Fig. 3

Fig. 4

Fig. 5

Fig. 6

**IN DER BESCHREIBUNG AUFGEFÜHRTE DOKUMENTE**

**In der Beschreibung aufgeführte Patentdokumente**

- DE 10105298 C1
- JP 06341430 B